# EUROPEAN PATENT SPECIFICATION

(11) **EP 2 739 432 B1**
(45) Date of publication and mention of the grant of the patent: **05.01.2022**
(21) Application number: 12756540.6
(22) Date of filing: 02.08.2012
(51) Int. Cl.: B23K 35/26, C22C 12/00, C22C 13/02, B23K 35/02

(54) **HIGH IMPACT TOUGHNESS SOLDER ALLOY**
LÖTLEGIERUNG MIT HOHER KERBSCHLAGZÄHIGKEIT
ALLIAGE DE BRASAGE À HAUTE RESISTANCE AUX CHOCS

(30) Priority: 02.08.2011 US 201161514303 P
(43) Date of publication of application: 11.06.2014
(60) Divisional application: 21181116.1
(73) Proprietor: Alpha Assembly Solutions Inc., Waterbury CT 06702 (US)
(72) Inventor: PANDHER, Ranjit, South Plainfield, New Jersey 07080 (US); SINGH, Bawa, South Plainfield, New Jersey 07080 (US); SARKAR, Siuli, New Jersey 07080-2409 (US); CHEGUDI, Sujatha, New Jersey 07080-2409 (US); KUMAR, Anil K. N., New Jersey 07080-2409 (US); CHATTOPADHYAY, Kamanio, New Jersey 07080-2409 (US); LODGE, Dominic, Woking Surrey GU21 5RZ (GB); DE AVILA RIBAS, Morgana, New Jersey 07080-2409 (US)
(74) Representative: BRP Renaud & Partner mbB Rechtsanwälte Patentanwälte Steuerberater
(86) International application number: PCT/GB2012/051874
(87) International publication number: WO 2013/017883

(56) References cited:
- EP-A1- 0 715 927
- WO-A1-2008/056676
- CN-A- 101 301 705
- CN-A- 102 029 479
- CN-B- 101 392 337
- JP-A- 11 033 775
- JP-A- 2000 079 494
- JP-A- 2000 141 079
- JP-A- 2001 179 483
- JP-A- 2001 298 270
- JP-A- 2001 334 386
- US-A- 5 569 433
- US-A- 5 833 921
- US-A1- 2003 230 361

## Description

The present invention relates to an alloy, in particular to a lead-free solder alloy.

A number of lead-free solder alloys are known, which provide non-toxic alternatives to the most widely used solder alloy - eutectic 37%Pb-63%Sn alloy. Examples of such lead-free alloys include the binary eutectic 58%Bi-42%Sn alloy (see, for example, US 5,569,433 B) and the binary 40%Bi-60%Sn alloy (see, for example, US 6,574,411 A). Such alloys exhibit a loss of ductility at high strain rates, which can be improved by the addition of up to 1% by weight silver (see, for example, US 5,569,433 B). However, the impact energies exhibited by these alloys, measured using the Charpy Impact Test, are relatively low. Accordingly, there is a need to develop lead-free solder alloys which exhibit improved impact toughness.

Furthermore, in order for such lead-free alloys to be used in soldering methods such as wave and reflow soldering, the alloys must exhibit good wettability in relation to a variety of substrate materials such as copper, nickel and nickel phosphorus ("electroless nickel"). Such substrates may be coated to improve wetting, for example by using tin alloys, silver, gold or organic coatings (OSP). Good wetting also enhances the ability of the molten solder to flow into a capillary gap, and to climb up the walls of a through-plated hole in a printed wiring board, to thereby achieve good hole filling. JP2000141079A related to a leadless solder alloy. JP2001298270A relates to an electronic unit and solder used for its connection.

EP0715927A1 relates to a lead-free solder and its use. JP2001179483A relates to a packaging structural body for electronic parts and producing method therefor.

The present invention aims to solve at least some of the problems associated with the prior art, or to provide commercially acceptable alternatives

The invention is defined in the claims.

In a first aspect the present invention provides a lead-free solder alloy according to claim 1.

Surprisingly, it has been found that incorporation of small amounts of one or more of Ce, Ni and Ge results in the alloy exhibiting increased impact energy in comparison to the corresponding Sn-Bi base alloy or, if the alloy contains Ag, the corresponding Sn-Bi-Ag base alloy. This indicates improved strength and ductility of the alloy. Further advantages provided to the alloys by incorporation of these elements include improved wettability, increased thermal conductivity, increased yield strength and increased tensile strength.

In addition, the presence of Ni results in lowering of the Cu dissolution rate, improvements in the thermal fatigue properties, increased aging stability (in particular when combined with Cu) and refinement of the alloy's microstructure. The presence of Ge reduces oxidation and, when used as a solder alloy, results in lustrous joints. The presence of Al and/or Mg can increase oxidation resistance of the alloy and improves the wetting. The presence of Co results in higher toughness, lower Cu dissolution, higher tensile strength and a more refined microstructure (in particular when combined with Cu). When used as a solder alloy, the presence of Co results in lustrous joints and lower levels of dross formed on the top of an open tank of the solder. The presence of Cu in the alloy increases ductility, reduces the occurrence of copper leaching and

increases resistance to thermal fatigue. These properties caused by the presence of Cu are particularly pronounced in the absence of Ag. In particular, substituting Ag for Cu in am SnBiAg base alloy results in particularly reduced Cu dissolution, particularly improved mechanical properties (in particular when combined with Co), particularly improved drop shock resistance (in particular when combined with Ni) and particularly improved creep rupture resistance. The presence of Mn and/or Ti results in improved drop shock performance of the alloy. The presence of Ti results in increased thermal conductivity and increased thermal fatigue life.

### Definitions:

The term "solder alloy" used herein refers to a fusible metal alloy with a melting point in the range of from 90 - 400 degrees C.

The "Charpy impact test" referred to herein, also known as the Charpy v-notch test, is a standardized high strain-rate test which determines the amount of energy absorbed by a material during fracture. This absorbed energy is a measure of a given material's toughness and acts as a tool to study temperature-dependent brittle-ductile transition. Further details regarding this test can be found in *Charpy Impact Test: Factors and Variables,* J. M. Holt, ASTM STP 1072, the contents of which is hereby incorporated by reference.

The term "wettability" used herein refers to the degree to which solder spread on a wettable surface. Wettability is determined by surface tension of the liquid solder and its ability to react with the wettable surface. Wetting can also be described in terms of the contact angle of the molten, and subsequently frozen solder alloy on a substrate, with lower contact angles being favoured over high contact angles.

The term "wave soldering" used herein refers to the large-scale soldering process by which electronic components are soldered to a printed circuit board (PCB) to form an electrical assembly.

The term "reflow soldering" used herein refers to the process where solder paste is printed or dispensed, or a solder perform is placed on the surface of a printed circuit board, components are placed in or near the deposited solder, and the assembly is heated to a temperature above the liquidus of the solder alloy.

The term "rare earth element" used herein refers to an element selected from Sc, Y, La, Ce, Pr, Nd, Pm, Sm, Eu, Gd, Tb, Dy, Ho, Er, Tm, Yb and Lu.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The alloy may comprise from 35 to 55 %wt Bi, preferably from 35 to 50 %wt Bi, more preferably from 35 to 45 %wt Bi and even more preferably about 40 %wt Bi. Advantageously, such Bi contents result in the alloy exhibiting increased ductility compared to alloys with higher levels of Bi. Alternatively, the alloy may comprise from 57 to 59 %wt Bi, preferably about 58 %wt Bi. Advantageously, such Bi contents reduce the melting point of the alloy compared to alloys containing lower levels of Bi.

In a reference example, the alloy comprises from 0.01 to 0.5 %wt Ce, more preferably from 0.05 to 0.1 %wt Ce.

In a reference example, the alloy comprises from 0.01 to 0.5 %wt Ni, more preferably from 0.025 to 0.1 %wt Ni, even more preferably from 0.025 to 0.05 %wt Ni, most preferably about 0.03 %wt Ni.

In a reference example, the alloy comprises from 0.001 to 0.1 %wt Ge, more preferably from 0.001 to 0.01 %wt Ge.

Preferably the alloy comprises from 0.01 to 0.8 %wt Ag, more preferably from 0.3 to 0.7 %wt Ag, even more preferably 0.4 to 0.6 %wt Ag, still even more preferably about 0.5 %wt Ag. The presence of Ag increases the ductility of the alloy and also reduces surface oxidation.

In the following embodiments referring to reference examples and to examples of the present invention the alloy comprises one or more of:
from 0 to 0.7 %wt Al, more preferably from 0.003 to 0.6 Al, even more preferably from 0.003 to 0.5 %wt Al (reference example);
from 0.001 to 1.0 %wt Au, more preferably from 0.003 to 0.7 Au, even more preferably from 0.005 to 0.5 %wt Au (reference example);
from 0.01 to 0.07 %wt Co, still even more preferably from 0.02 to 0.04 %wt Co, still even more preferably about 0.03 %wt Co (present invention);
from 0.001 to 1.0 %wt Cr, more preferably from 0.003 to 0.7 Cr, even more preferably from 0.005 to 0.5 %wt Cr (reference example);
from 0.05 to 0.5 %wt Cu, more preferably from 0.05 to 0.4 %wt Cu, even more preferably from 0.1 to 0.3 %wt Cu, still even more preferably about 0.2 %wt Cu (present invention);
from 0 to 1.5 %wt In, more preferably from 0.1 to 1.0 %wt In, even more preferably from 0.2 to 1.0 %wt In, still even more preferably about 1.0 %wt In (reference example);
from 0 to 0.2 %wt Mg, more preferably from 0.05 to 0.18 %wt Mg, even more preferably from 0.05 to 0.1 %wt Mg (reference example);
from 0 to 0.2 %wt Mn, more preferably from 0.05 to 0.18 %wt Mn, even more preferably from 0.05 to 0.1 %wt Mn (reference example);
from 0 to 0.01 %wt P, more preferably from 0.001 to 0.01 %wt P, even more preferably from 0.005 to 0.01 %wt P (reference example);
from 0.001 to 1.0 %wt Sb, more preferably from 0.003 to 0.7 Sb, even more preferably from 0.005 to 0.5 %wt Sb (reference example);
from 0.001 to 1.0 %wt Sc, more preferably from 0.003 to 0.7 Sc, even more preferably from 0.005 to 0.5 %wt Sc (reference example);
from 0 to 0.2 %wt Ti, more preferably from 0.05 to 0.18 %wt Ti, even more preferably from 0.05 to 0.1 %wt Ti (reference example);
from 0.001 to 1.0 %wt Y, more preferably from 0.003 to 0.7 Y, even more preferably from 0.005 to 0.5 %wt Y (reference example);
from 0.001 to 1.0 %wt Zn, more preferably from 0.003 to 0.7 Zn, even more preferably from 0.005 to 0.5 %wt Zn (reference example); and
from 0.001 to 1.0 %wt rare earth elements, more preferably from 0.003 to 0.7 rare earth elements, even more preferably from 0.005 to 0.5 %wt rare earth elements (reference example);

The presence of In increases the ductility of the alloy and reduces surface oxidation. The presence of Au in the alloy increases the ductility of the alloy. The presence of Zn in the alloy refines and redistributes the Bi rich phase. An interfacial IMC layer forms, which prevents a Bi-rich segregation layer forming. The presence of P reduces oxidation of the alloy. The presence of Sb improves the ductility of the alloy.

Preferably, the reference example alloy comprises only one of Al and Ni.

The alloy comprises Cu and Co. A particularly preferred alloy comprises:
from 57 to 59 %wt Bi;
from 0.1 to 0.3 %wt Cu; and
from 0.02 to 0.04 %wt Co
and the balance Sn, together with any unavoidable impurities.

The above-described alloys containing Cu and Co advantageously exhibit superior mechanical properties to the corresponding SnBi base alloy. For example, these alloys exhibit approximately 9% higher tensile strengths, approximately 11% higher elastic moduli, approximately 8.4% higher toughness (based on Charpy Impact Resistance Test), approximately 8% higher creep elongation and approximately 11% longer creep rupture time (80 °C, 2.3 kg load) in comparison to the SnBi base alloy.

The above-described alloys containing Cu and Co advantageously exhibit superior thermal fatigue resistance to the SnBi base alloy. For example, when carrying out Accelerated Thermal Cycling (conditions: TC3/NTC-C, -40 °C to 125 °C, 10 minute dwell) no cracks are observed for chip components up to 1000 cycles. In addition, no cracks are observed for Ball Grid Array (BGA) components for up to 500-800 cycles in comparison to the cracks observed on the SnBi base alloy after only 200 cycles.

The above-described alloys containing Cu and Co advantageously exhibit improved drop shock resistance, in particular an increase of approximately 40% in the number of drops in a standard drop shock resistance test compared to the SnBi base alloy.

The above-described alloys containing Cu and Co advantageously exhibit, in comparison to the SnBi base alloy, approximately 4% higher thermal and electrical conductivities and approximately 30 times lower Cu dissolution. Accordingly, these alloys are particularly suitable for photovoltaic ribbon applications. The alloys are eutectics with melting points of approximately 138 °C and, in contrast to the SnBi base alloy, do not exhibit ageing degradation. The alloys also exhibit improved, more refined microstructures, which presumably contribute to their improved mechanical properties.

The above described properties of the alloys containing Cu and Co are also exhibited when the alloys or alloy powders are produced on the 400 kg and 50 kg scales, respectively, indicating the industrial viability of manufacturing these alloys on an industrial scale.

The alloy is a solder alloy.

The alloy is lead-free. Lead-free solder alloys are advantageous due to the toxic nature of lead.

The alloys of the present invention may be in the form of a bar, a stick, a solid or flux cored wire, a foil or strip, a film, a preform, or a powder or paste (powder plus flux blend), or solder spheres for use in ball grid array joints, or a pre-formed solder piece or a reflowed or solidified solder joint, or pre-applied on any solderable material such as a copper ribbon for photovoltaic applications.

Preferably the alloy exhibits an impact energy when measured using the Charpy Impact Test of at least 5% greater than that of the corresponding Sn-Bi base alloy. Preferably the impact energy is at least 8% greater, more preferably at least 10% greater, even more preferably at least 12% greater.

It will be appreciated that the alloys according to the present invention may contain unavoidable impurities, although, in total, these are not to exceed 1 wt% of the composition. Preferably, the alloys contain unavoidable impurities in an amount of not more than 0.5 wt% of the composition, more preferably not more than 0.3 wt% of the composition, still more preferably not more than 0.1 wt% of the composition.

In a reference example, there is provided an alloy comprising:
from 41 to 43 %wt Sn;
one or more of:
   from 0 to 1.0 wt% Ag;
   from 0 to 1.0 %wt Al;
   from 0 to 1.0 %wt Au;
   from 0 to 1.0 %wt Co;
   from 0 to 1.0 %wt Cr;
   from 0 to 1.0 %wt Cu;
   from 0 to 2.0 %wt In;
   from 0 to 1.0 %wt Mn;
   from 0 to 1.0 %wt P;
   from 0 to 1.0 %wt Sb;
   from 0 to 1.0 %wt Sc;
   from 0 to 1.0 %wt Ti;
   from 0 to 1.0 %wt Y;
   from 0 to 1.0 %wt Zn;
   from 0 to 1.0 %wt rare earth elements;
   from 0.01 to 1.0 %wt Ce;
   from 0.01 to 1.0 %wt Ni; and
   from 0.001 to 1.0 %wt Ge;
and the balance Bi, together with any unavoidable impurities.

In a reference example, there is provided an alloy comprising:
from 41 to 43 %wt Sn;
from 0 to 1.0 wt% Ag;
one or more of:
   from 0 to 1.0 %wt Al;
   from 0 to 1.0 %wt Au;
   from 0 to 1.0 %wt Co;
   from 0 to 1.0 %wt Cr;
   from 0 to 1.0 %wt Cu;
   from 0 to 2.0 %wt In;
   from 0 to 1.0 %wt Mn;
   from 0 to 1.0 %wt P;
   from 0 to 1.0 %wt Sb;
   from 0 to 1.0 %wt Sc;
   from 0 to 1.0 %wt Ti;
   from 0 to 1.0 %wt Y;
   from 0 to 1.0 %wt Zn;
   from 0 to 1.0 %wt rare earth elements;
   from 0.01 to 1.0 %wt Ce;
   from 0.01 to 1.0 %wt Ni; and
   from 0.001 to 1.0 %wt Ge;
and the balance Bi, together with any unavoidable impurities.

In a reference example, there is provided an alloy comprising:
from 50 to 65 %wt Sn;
one or more of:
   from 0 to 1.0 wt% Ag;
   from 0 to 1.0 %wt Al;
   from 0 to 1.0 %wt Au;
   from 0 to 1.0 %wt Co;
   from 0 to 1.0 %wt Cr;
   from 0 to 1.0 %wt Cu;
   from 0 to 2.0 %wt In;
   from 0 to 1.0 %wt Mn;
   from 0 to 1.0 %wt P;
   from 0 to 1.0 %wt Sb;
   from 0 to 1.0 %wt Sc;
   from 0 to 1.0 %wt Ti;
   from 0 to 1.0 %wt Y;
   from 0 to 1.0 %wt Zn;
   from 0 to 1.0 %wt rare earth elements;
   from 0.01 to 1.0 %wt Ce;
   from 0.01 to 1.0 %wt Ni; and
   from 0.001 to 1.0 %wt Ge;
and the balance Bi, together with any unavoidable impurities.

In a reference example, there is provided an alloy comprising:
from 50 to 65 %wt Sn;
from 0 to 1.0 wt% Ag;
one or more of:
   from 0 to 1.0 %wt Al;
   from 0 to 1.0 %wt Au;
   from 0 to 1.0 %wt Co;
   from 0 to 1.0 %wt Cr;
   from 0 to 1.0 %wt Cu;
   from 0 to 2.0 %wt In;
   from 0 to 1.0 %wt Mn;
   from 0 to 1.0 %wt P;
   from 0 to 1.0 %wt Sb;
   from 0 to 1.0 %wt Sc;
   from 0 to 1.0 %wt Ti;
   from 0 to 1.0 %wt Y;
   from 0 to 1.0 %wt Zn;
   from 0 to 1.0 %wt rare earth elements;
   from 0.01 to 1.0 %wt Ce;
   from 0.01 to 1.0 %wt Ni; and
   from 0.001 to 1.0 %wt Ge;
and the balance Bi, together with any unavoidable impurities.

In a further aspect, the present invention provides a soldered joint comprising an alloy of the present invention.

In a further aspect, the present invention provides the use of an alloy of the present invention in a soldering method. Such soldering methods include, but are not restricted to, wave soldering, Surface Mount Technology (SMT) soldering, die attach soldering, thermal interface soldering, hand soldering, laser and RF induction soldering, and rework soldering.

In a reference example there is provided an alloy comprising:
from 0 to 10 %wt Ag;
from 35 to 59 %wt Bi; and
one or more of:
   from 0.01 to 1.0 %wt Ce;
   from 0.01 to 1.0 %wt Ni; and
   from 0.001 to 1.0 %wt Ge;
   from 0.001 to 1.0 %wt Al;

The invention will now be described, by way of example only, with reference to the following drawings in which:
Figure 1 is a plot showing the results of the Charpy Impact Test on alloys according to reference examples;
Figure 2 is a plot showing the results of the Charpy Impact Test on alloys according to reference examples;
Figure 3 is a plot of linear spread in mm on a copper organic solderability preservative (OSP) of a number of alloys according to reference examples.
Figure 4 is a plot showing the results of the Bulk Shear Test for a number of alloys according to a number of reference examples.
Figure 5 is a plot showing the results of the Hardness Test for a number of alloys according to reference examples.
Figure 6 is a plot of yield strengths of a number of alloys according to reference examples.
Figure 7 is a plot of tensile strengths of a number of alloys according to reference examples.
Figure 8 is a plot showing the results of the Bulk Shear Test for a number of alloys according to reference examples.
Figure 9 is a plot showing the results of the Lead Pull Test for a number of alloys according to reference examples.
Figure 10 is a plot of thermal conductivities of a number of alloys according to reference examples.
Figures 11-13 show electron microscope images of the microstructures of Sn57.6Bi0.4Ag, Sn57.45Bi0.5Ag0.05Ni and Sn57.4Bi0.5Ag0.1Ce, respectively.
Figure 14 shows the time for Cu dissolution of a number of alloys according to the present invention and a number of reference examples.
Figure 15 shows the results of drop shock testing for an alloy according to the present invention and reference examples.
Figure 16 shows the results of thermal fatigue testing for a number of alloys according to reference examples.
Figure 17 shows the results of thermal fatigue testing for an alloy according to the present invention and reference examples.

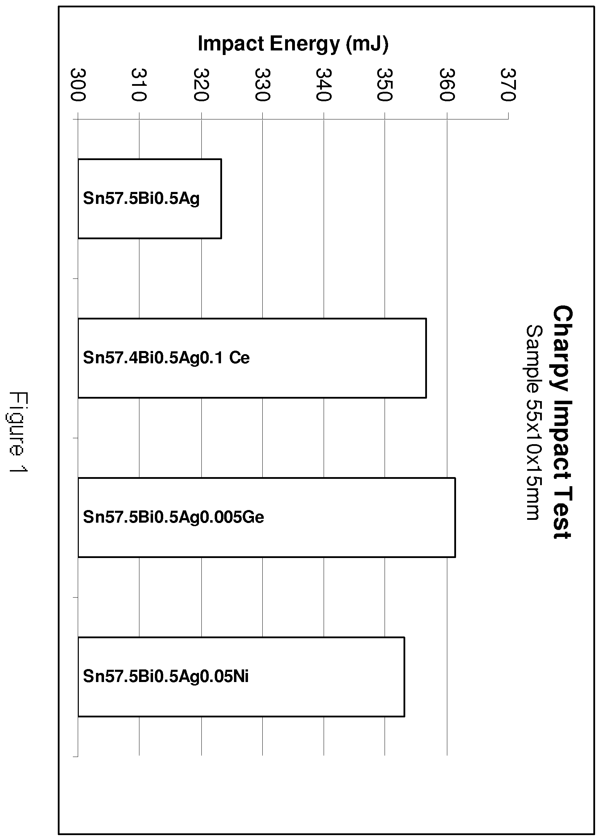

Referring to Figure 1, the Charpy Impact Test was carried out (sample size 55 x 10 x 15 mm) on four alloys (from left to right): Sn57.5Bi0.5Ag, Sn57.4Bi0.5Ag0.1Ce, Sn57.495Bi0.5Ag0.005Ge and Sn57.45Bi0.5Ag0.05Ni (reference examples). The results indicate that the presence of Ce, Ge and Ni results in the alloys exhibiting an increase in impact energy of from approximately 10 to 12% compared to the Sn57.5Bi0.5Ag base alloy.

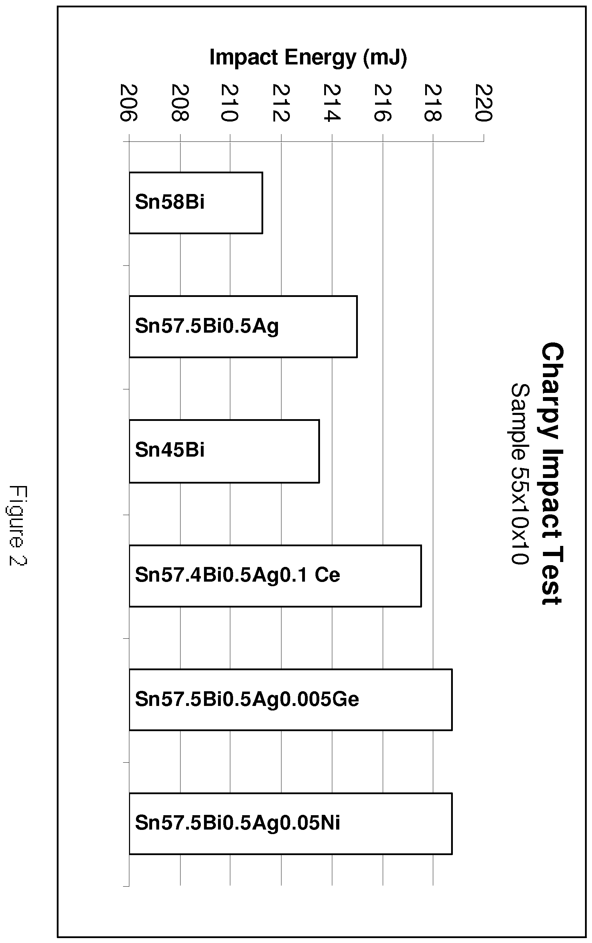

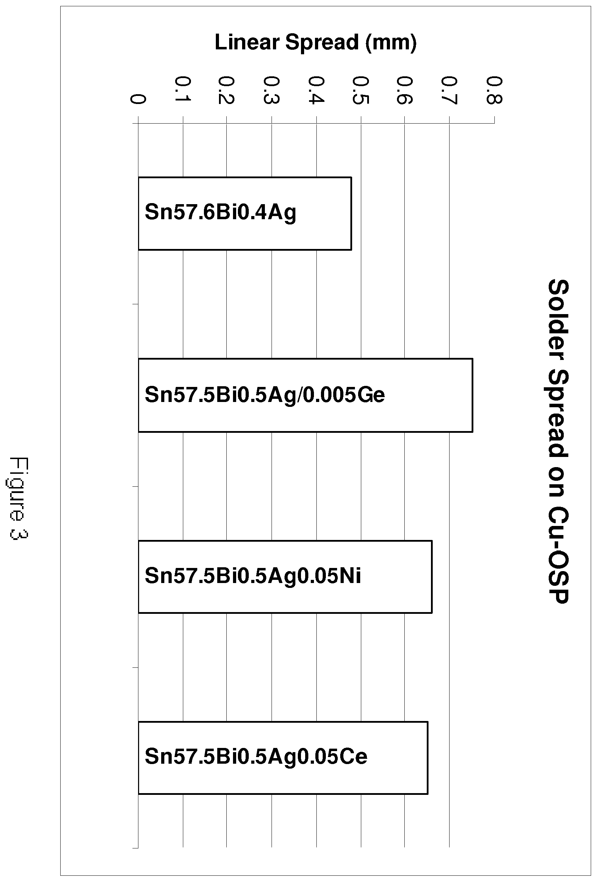

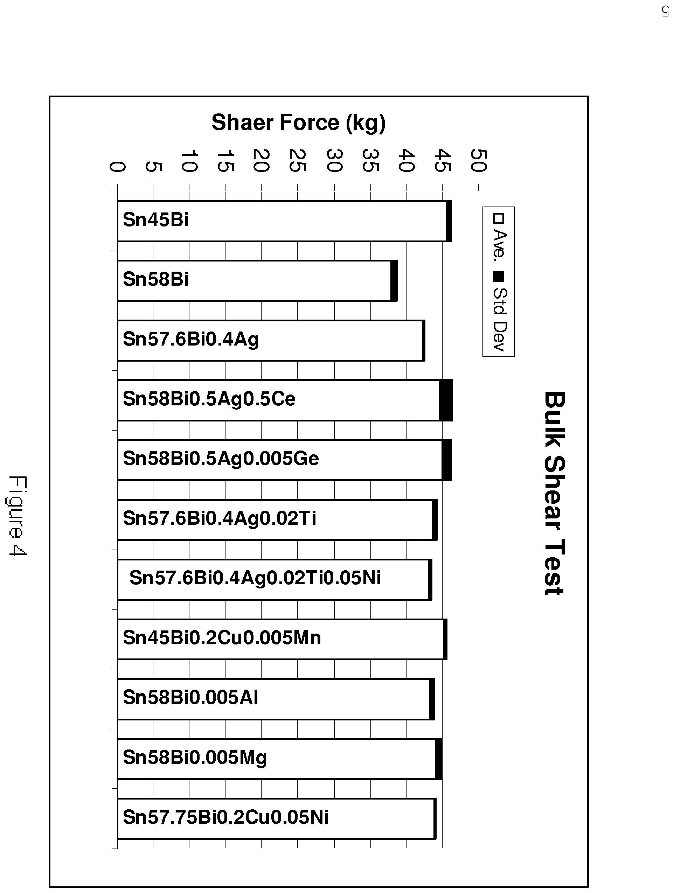

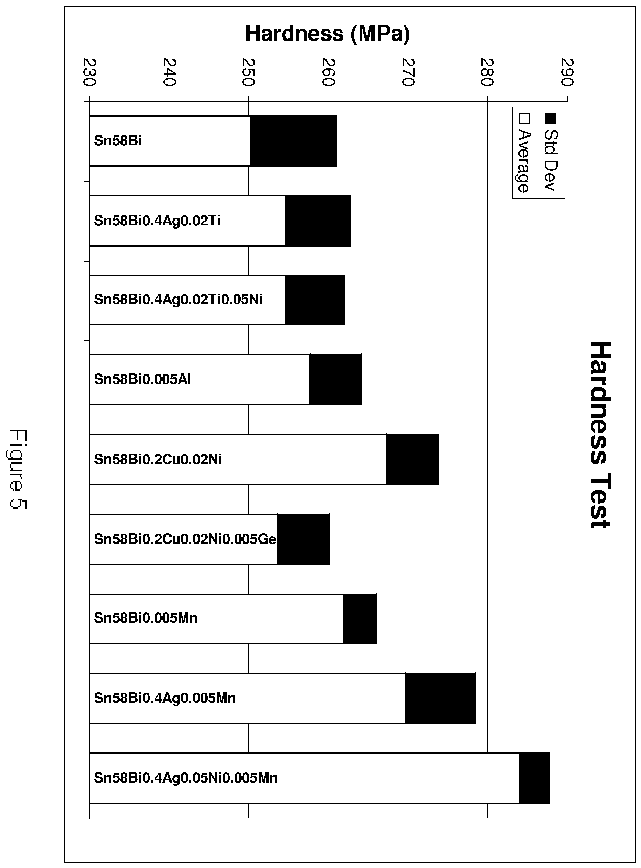

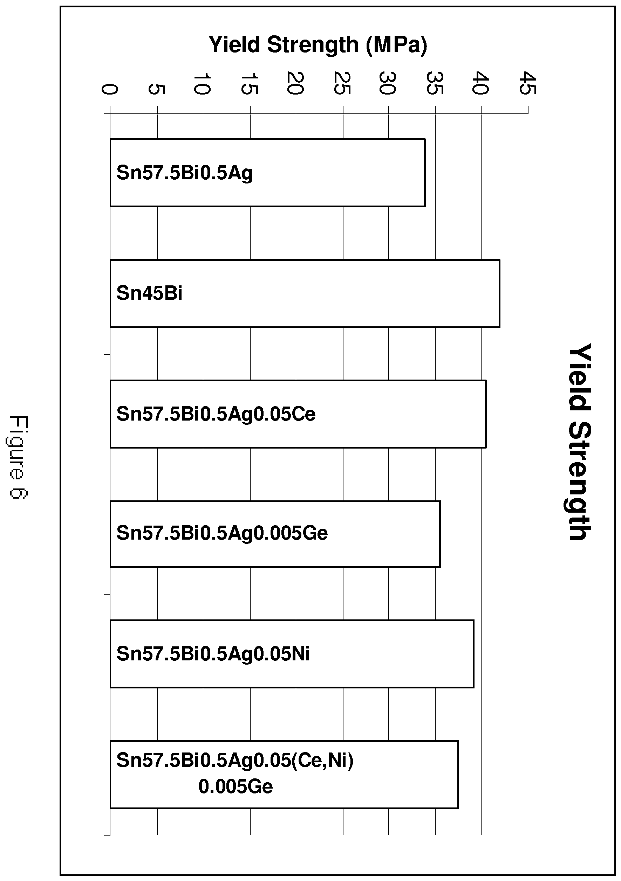

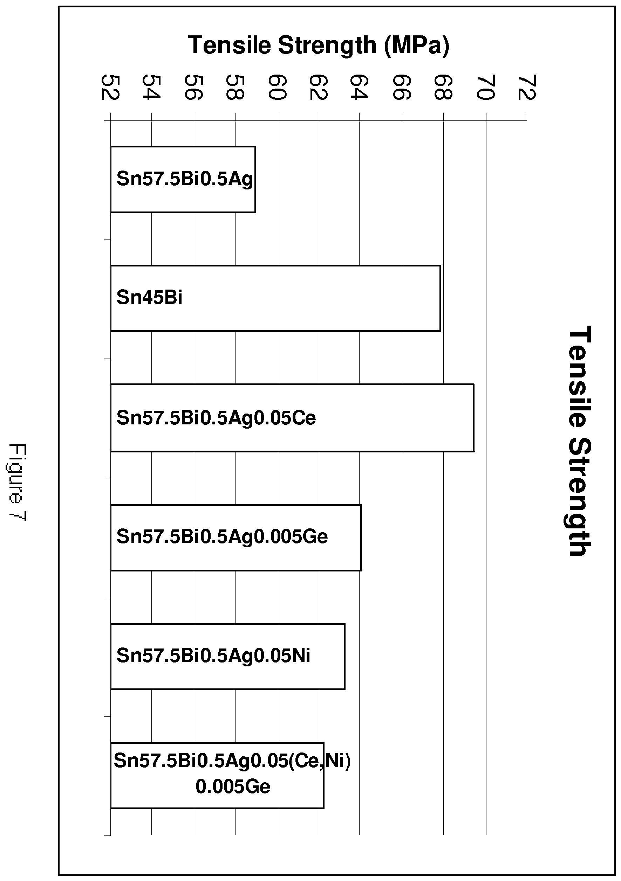

Referring to Figure 2, the Charpy Impact Test was carried out (sample size 55 x 10 x 10 mm) on six alloys (from left to right): Sn58Bi, Sn57.5Bi0.5Ag, Sn45Bi, Sn57.4Bi0.5Ag0.1Ce, Sn57.4555Bi0.5Ag0.005Ge and Sn57.45Bi0.5Ag0.05Ni (all reference example). The results indicate that a reduction in the level of Bi and the addition of Ag, Ce, Ge and Ni improves the toughness of the alloys. Charpy Impact Tests carried out on the alloys Sn57.54Bi0.4Ag0.03Ni0005Mn (reference example), Sn57.75Bi0.2Cu0.03Ni (reference example), Sn57.7Bi0.2Cu0.03Co (present invention), Sn45Bi0.03Ni (reference example) and Sn45Bi0.1Cu0.034Co (present invention) indicated that each of these alloys exhibit an impact energy in excess of 225 kJ. Sn57.7Bi0.2Cu0.03Co exhibited an impact energy in excess of 230 kJ. Referring to Figure 3, linear spreads were determined for the alloys (from left to right): Sn57.6Bi0.4Ag, Sn57.5Bi0.5Ag0.005Ge, Sn57.5Bi0.5Ag0.05Ni and Sn57.5Bi0.5Ag0.05Ce (all reference example). The results demonstrate that the alloys exhibit improved wettability compared to their base Sn-Bi-Ag alloy. Similar results were obtained for the alloys Sn58Bi0.2Cu0.03Ni (reference example), Sn58Bi0.2Cu0.03Co (present invention) and Sn58Bi0.4Ag0.03Ni (reference example), for both samples manufactured on the laboratory and 400 kg scales. Referring to Figures 4-7, it is demonstrated that the alloys of reference examples exhibit increased shear strength, hardness, yield strength and tensile strength in comparison to their base Sn-Bi-Ag alloy. In Figure 4, the bulk shear test results are shown for the following alloys (from left to right): Sn45Bi, Sn58Bi, Sn57.6Bi0.4Ag, Sn58Bi0.5Ag0.5Ce, Sn58Bi0.5Ag0.005Ge, Sn57.6Bi0.4Ag0.02Ti, Sn57.6Bi0.4Ag0.02Ti0.05Ni, Sn45Bi0.2Cu0.005Mn, Sn58Bi0.005Al, Sn58Bi0.005Mn and Sn57.75Bi0.2Cu0.05Ni (all reference examples). In Figure 5, the hardness values are shown for the following alloys (from left to right): Sn58Bi, Sn58Bi0.4Ag0.02Ti, An58Bi0.4Ag0.02Ti0.05Ni, Sn58Bi0.005Al, Sn58Bi0.2Cu0.02Ni, Sn58Bi0.2Cu0.02Ni0.005Ge, Sn58Bi0.005Mn, Sn58Bi0.4Ag0.005Mn and Sn58Bi0.4Ag0.05Ni0.005Mn (all reference examples). In Figure 6 the yield strength values are shown for the following alloys (from left to right) Sn57.5Bi0.5Ag, Sn45Bi, Sn57.5Bi0.5Ag0.05Ce, Sn57.5Bi0.5Ag0.005Ge,Sn57.5Bi0.5Ag0.05Ni and Sn57.5Bi0.5Ag0.05(Ce, Ni)0.005Ge (all reference examples). In Figure 7 the tensile strengths are shown for the following alloys (from left to right) Sn57.5Bi0.5Ag, Sn45Bi, Sn57.5Bi0.5Ag0.05Ce, Sn57.5Bi0.5Ag0.005Ge, Sn57.5Bi0.5Ag0.05Ni and Sn57.5Bi0.5Ag0.05(Ce, Ni)0.005Ge (all reference examples).

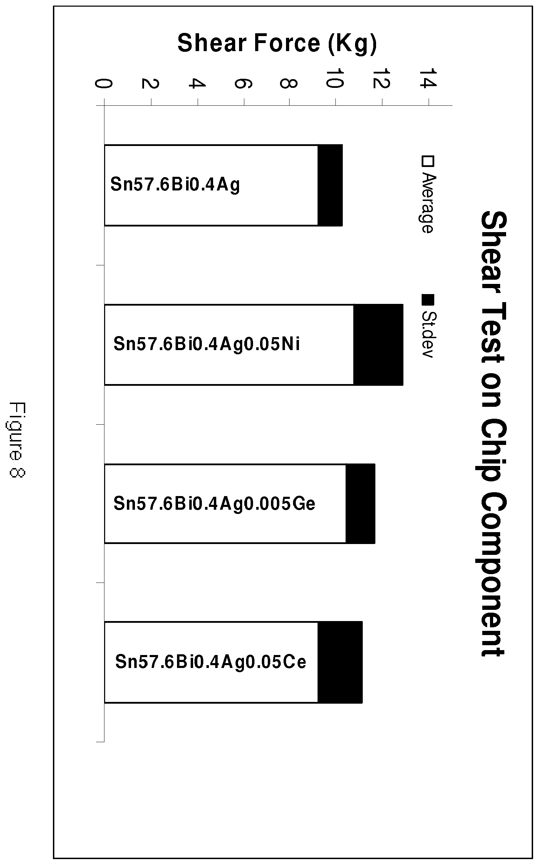

Referring to Figure 8, it is demonstrated that the improvement in shear strength is also exhibited by the alloys when incorporated onto a chip component. The results are shown for the following alloys (from left to right): Sn57.6Bi0.4Ag, Sn57.6Bi0.4Ag0.05Ni, Sn57.6Bi0.4Ag0.005Ge and Sn57.6Bi0.4Ag0.05Ce (all reference examples).

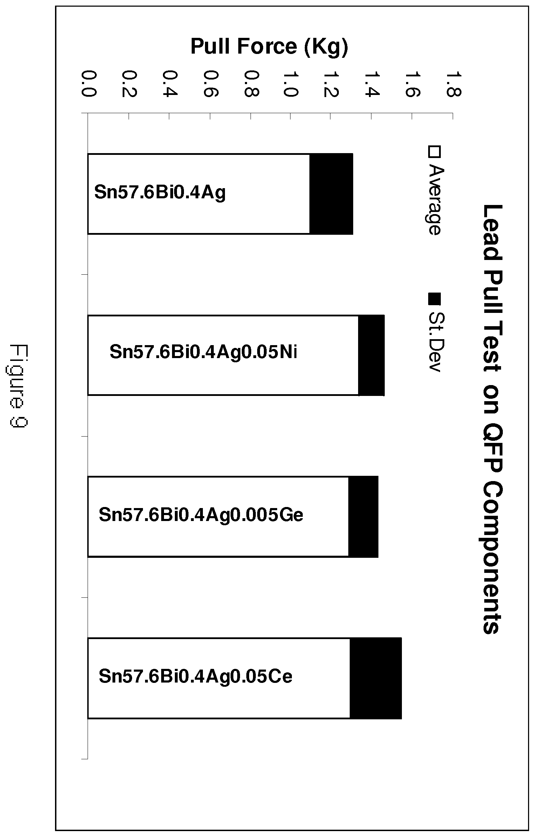

Referring to Figure 9, it is demonstrated that the when the alloys are incorporated onto QFP components, the force required to pull the lead from the chip after soldering increases in comparison to their base Sn-Bi-Ag alloy. In Figure 9 the results are shown for the following alloys (from left to right) Sn57.6Bi0.4Ag, Sn57.6Bi0.4Ag0.05Ni, Sn57.6Bi0.4Ag0.005Ge and Sn57.6Bi0.4Ag0.05Ce (all reference examples).

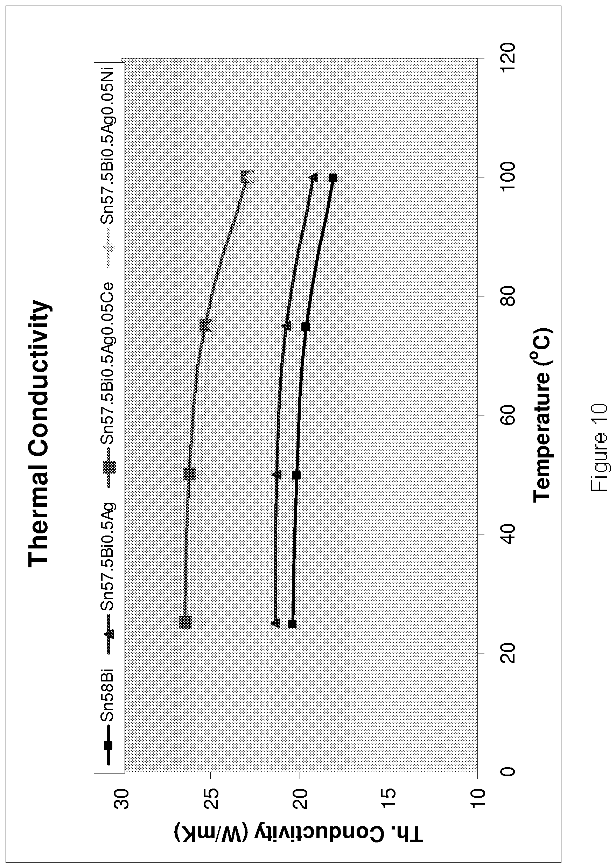

Referring to Figure 10, it is demonstrated that the alloys of the present invention exhibit improved thermal conductivity in comparison to their base Sn-Bi / Sn-Bi-Ag alloy. The results are shown for the alloys Sn58Bi (smaller squares), Sn57.5Bi0.5Ag (triangles), Sn57.5Bi0.5Ag0.05Ce (larger squares) and Sn57.5Bi0.5Ag0.05Ni (diamonds) (all reference examples).

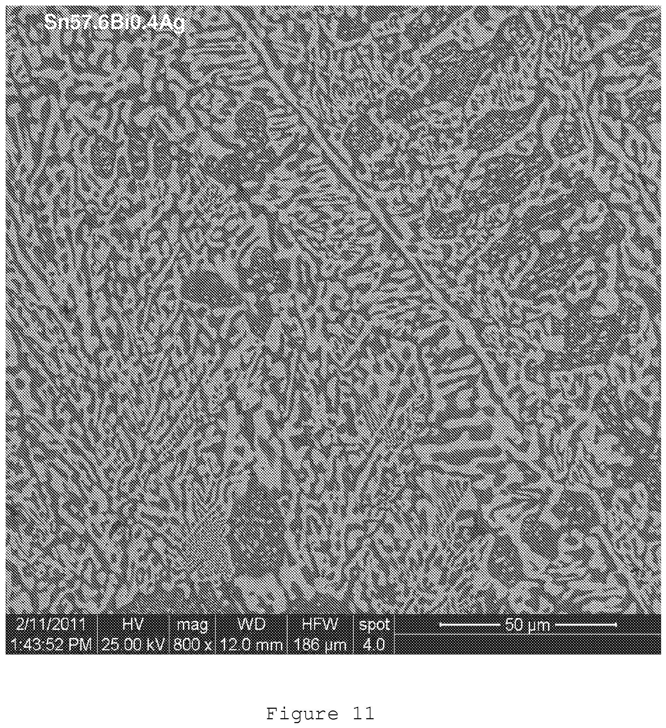

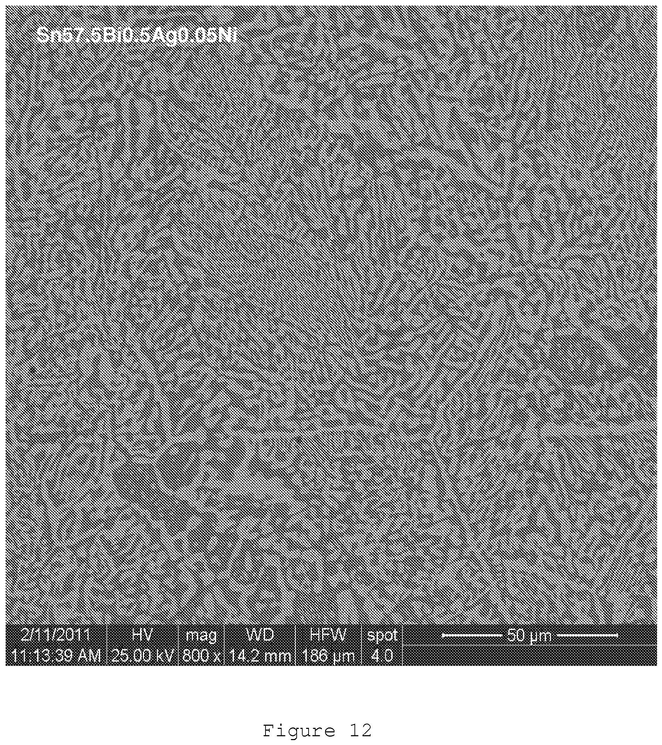

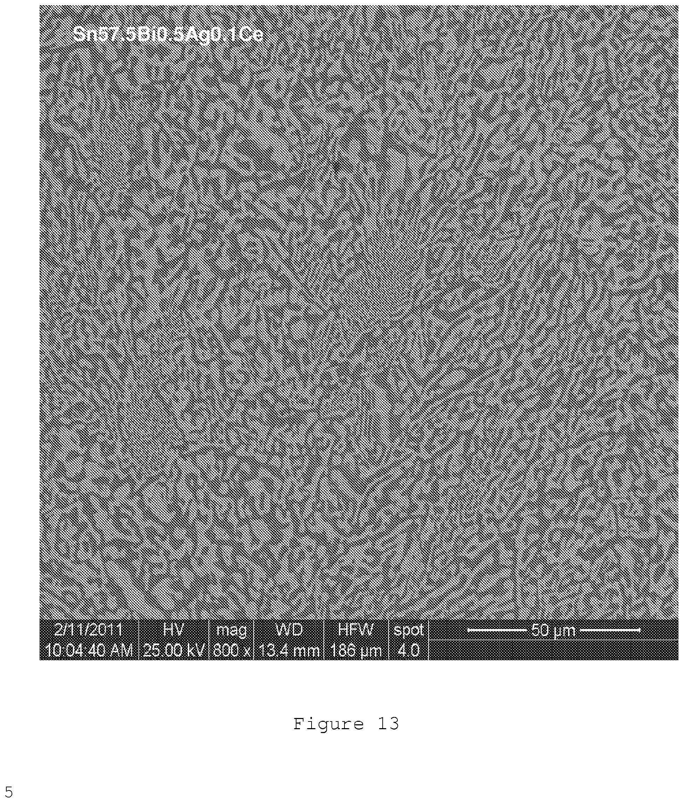

Referring to Figures 11-13, it is demonstrated that small additions of certain elements have the advantageous effect of refining the microstructure, leading to, for example, enhanced mechanical properties. Electron micrograph images of the alloys Sn57.8Bi0.2Cu0.03Ni (reference example) and Sn57.8Bi0.2Cu0.03Co (present invention) show microstructures which are still further refined.

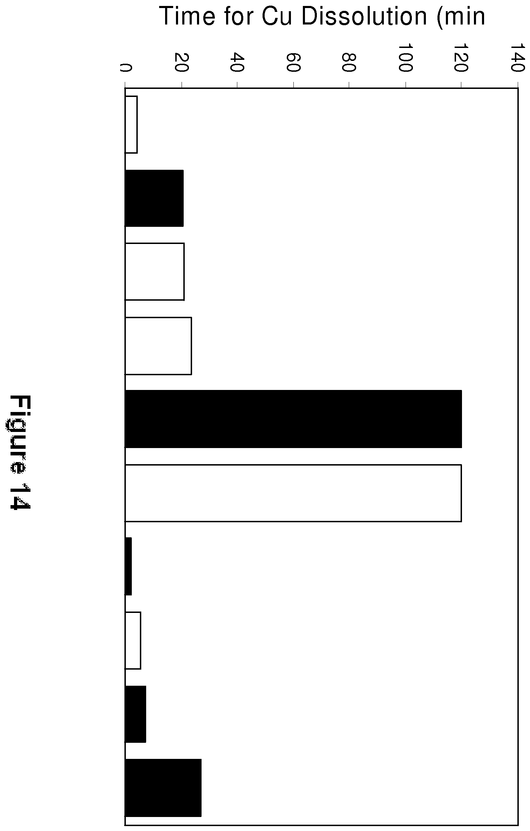

Referring to Figure 14, it is demonstrated that the alloys Sn58Bi0.2Cu0.06 (reference example) and Sn58Bi0.2Cu0.03Co (present invention) exhibit very low Cu dissolution. Accordingly, since these alloys also exhibit high electrical conductivity, they are particularly suitable for photovoltaic applications. The results in Figure 14 are shown for the alloys (from left to right): Sn58Bi0.4Ag (reference example), Sn58Bi0.4Ag0.03Ni (reference example), Sn58Bi0.4Ag0.03Ti (reference example), Sn58Bi0.4Ag0.007Mn (reference example), Sn58Bi0.2Cu0.06Ni (reference example), Sn58Bi0.2Cu0.03Co (present invention), Sn45Bi (reference example), Sn45Bi0.1Cu (reference example), Sn45Bi0.02Ni (reference example) and Sn45Bi0.1Cu0.06Co (present invention).

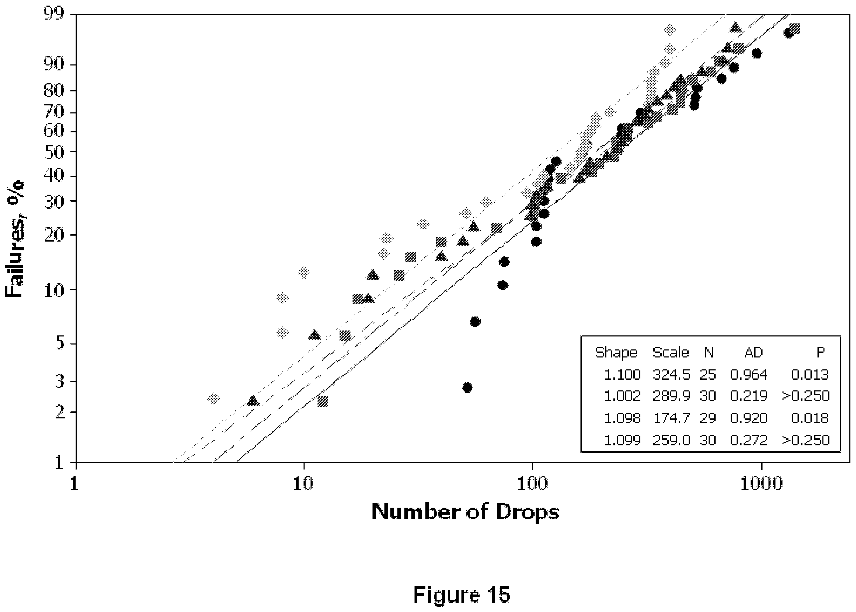

Referring to Figure 15, drop shock test results are indicated for the alloys Sn58BiCu0.2Ni0.06 (circles, average number of drops to failure: 324.5) (reference example), Sn58BiCu0.2Co0.03 (squares, average number of drops to failure 289.9) (present invention), Sn58Bi0.04Ag (diamonds, average number of drops to failure 174.7) (reference example) and Sn58Bi0.4Ag0.05Ni (triangles, average number of drops to failure 259.0) (reference example). The drop shock test followed JEDEC standard JESD22-B111 (test conditions: 1500 Gs, 0.5 millisecond duration, half-sine pulse). Boards were populated with Ball Grid Array (BGA) components on all 15 available positions. The results indicate that the alloys exhibit improved drop shock resistance compared to the Sn58Bi0.4Ag alloy.

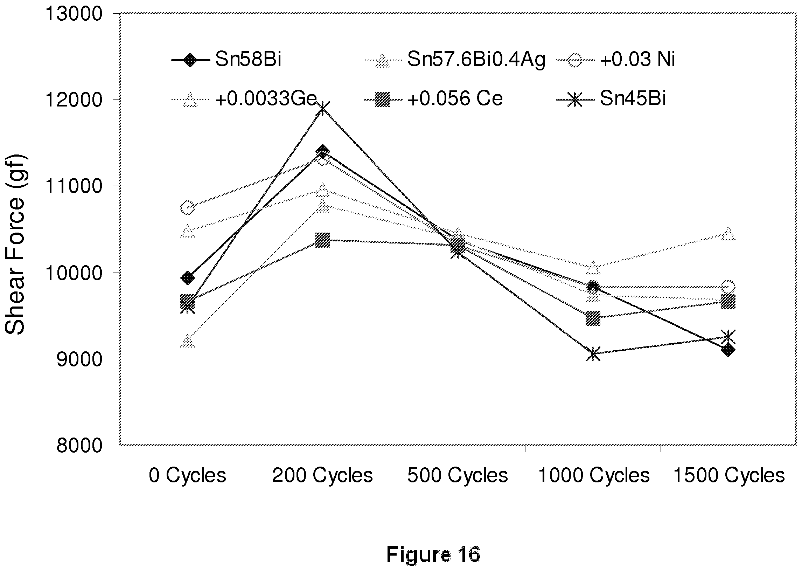

Referring to Figure 16, thermal fatigue testing was carried out on the alloys Sn58Bi (diamonds), Sn57.6Bi0.4Ag (filled triangles), Sn57.6Bi0.4Ag0.03Ni (hollow circles) (reference example), Sn57.6Bi0.4Ag0.0033Ge (hollow triangles), Sn57.6Bi0.4Ag0.056Ce (squares) and Sn45Bi (crosses) (all reference examples). The thermal cycling conditions corresponded to standard TC3/NTC-C (-40 to 125 °C; 10 minute dwell time). The alloys exhibited very little variation in shear strength after 1500 cycles compared to those of the Sn58Bi and Sn45Bi alloys. In addition, no cracks were observed after 1500 cycles for any of the alloys of the present invention.

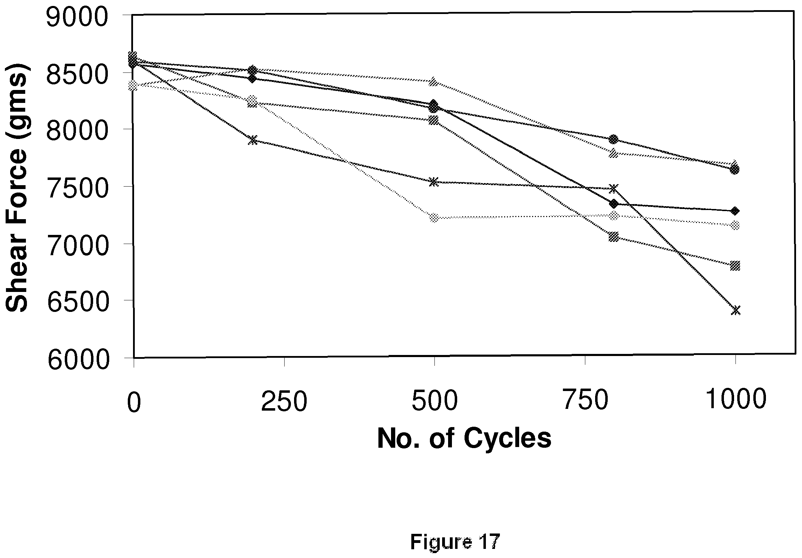

Referring to Figure 17, thermal fatigue testing was carried out on the alloys Sn57.6Bi0.4Ag (diamonds, 3^{rd} highest shear force after 1000 cycles) (reference example), Sn58Bi (squares, 5^{th} highest shear force after 1000 cycles) (reference example), Sn57.6Bi0.2Cu0.03Ni (triangles, highest shear force after 1000 cycles) (reference example), Sn57.6Bi0.2Cu0.03Co (dark circles, 2^{nd} highest shear force after 1000 cycles) (present invention), Sn57.6Bi0.4Ag0.03Ni (crosses, lowest shear force after 1000 cycles) (reference example) and Sn57.1Bi0.9Ag (light circles, 4^{th} highest shear force after 1000 cycles) (reference example). The thermal cycling conditions were the same as those used for the testing shown in Figure 16. 36 BGA84 boards were used for testing per alloy. Only 26 of the SnBi0.4Ag boards and 24 of the Sn58Bi boards survived 1000 cycles. In comparison, all 36 boards of Sn57.6Bi0.2Cu0.03Ni, Sn57.1Bi0.9Ag and Sn57.6Bi0.4Ag0.03Ni, and 35 board of Sn57.6Bi0.2Cu0.03Co, survived 1000 cycles.

## Claims

1. A lead-free solder alloy, comprising:
from 35 to 59 %wt Bi;
from 0.003 to 0.5 %wt Co;
from 0.05 to 1.0 %wt Cu;
from 0 to 1.0 wt% Ag,
and the balance Sn, together with any unavoidable impurities being not more than 1.0 %wt.

2. An alloy as claimed in claim 1, comprising from 35 to 55 %wt Bi or from 57 to 59 %wt Bi.

3. An alloy as claimed in any preceding claim, comprising:
from 0.01 to 0.8 %wt Ag, preferably from 0.3 to 0.7 %wt Ag, more preferably 0.4 to 0.6 %wt Ag, even more preferably about 0.5 %wt Ag.

4. An alloy as claimed in any preceding claim, comprising one or more of:
from 0.01 to 0.07 wt% Co; and
from 0.1 to 0.5 %wt Cu.

5. An alloy as claimed in claim 1 comprising:
from 57 to 59 %wt Bi;
from 0.1 to 0.3 %wt Cu;
from 0.02 to 0.04 %wt Co,
and the balance Sn, together with any unavoidable impurities.

6. An alloy as claimed in any preceding claim in the form of a bar, a stick, a solid or flux cored wire, a foil or strip, a film, a preform, or a powder or paste being powder plus flux blend, or solder spheres for use in ball grid array joints, or a pre-formed solder piece or a reflowed or solidified solder, or pre-applied on any solderable material such as a copper ribbon for photovoltaic applications.

7. An alloy as claimed in any preceding claim exhibiting an impact energy when measured using the Charpy Impact Test according to ASTM STP 1072 of at least 5% greater than that of the corresponding Sn-Bi base alloy, preferably at least 10% greater.

8. A soldered joint comprising an alloy as defined in any preceding claim.

9. Use of an alloy as defined in any of claims 1-7 in a soldering method, preferably wherein the soldering method is selected from wave soldering, Surface Mount Technology (SMT) soldering, die attach soldering, thermal interface soldering, hand soldering, laser and RF induction soldering and rework soldering.

## Patentansprüche

1. Bleifreie Lötlegierung, umfassend:
von 35 bis 59 Gew.-% Bi;
von 0,003 bis 0,5 Gew.-% Co;
von 0,05 bis 1,0 Gew.-% Cu;
von 0 bis 1,0 Gew.-% Ag,
und der Rest Sn, zusammen mit etwaigen unvermeidbaren Verunreinigungen nicht mehr als 1,0 Gew.-%.

2. Legierung nach Anspruch 1, umfassend von 35 bis 55 Gew.-% Bi oder von 57 bis 59 Gew.-% Bi.

3. Legierung nach einem der vorhergehenden Ansprüche, umfassend:
von 0,01 bis 0,8 Gew.-% Ag, vorzugsweise von 0,3 bis 0,7 Gew.-% Ag, mehr bevorzugt 0,4 bis 0,6 Gew.-% Ag, noch mehr bevorzugt etwa 0,5 Gew.-% Ag.

4. Legierung nach einem der vorhergehenden Ansprüche, umfassend eines oder mehrere von:
von 0,01 bis 0,07 Gew.-% Co; und
von 0,1 bis 0,5 Gew.-% Cu.

5. Legierung nach Anspruch 1, umfassend:
von 57 bis 59 Gew.-% Bi;
von 0,1 bis 0,3 Gew.-% Cu;
von 0,02 bis 0,04 Gew.-% Co, und der Rest Sn, zusammen mit etwaigen unvermeidbaren Verunreinigungen.

6. Legierung nach einem der vorhergehenden Ansprüche in Form einer Stange, eines Stabes, eines festen oder flussmittelgefüllten Drahtes, einer Folie oder eines Streifens, eines Films, eines Vorformlings oder eines Pulvers oder einer Paste, die eine Pulver-Flussmittel-Mischung ist,
oder Lötkugeln zur Verwendung in Kugelrasterverbindungen, oder ein vorgeformtes Lötmaterialstück oder ein aufgeschmolzenes oder verfestigtes Lötmaterial, oder voraufgebracht auf ein beliebiges lötbares Material, wie beispielsweise ein Kupferband für photovoltaische Anwendungen.

7. Legierung nach einem der vorhergehenden Ansprüche, die bei Messung unter Verwendung des Charpy-Schlagtests gemäß ASTM STP 1072 eine Schlagenergie aufweist, die mindestens 5 % größer als die der entsprechenden Legierung auf Sn-Bi-Basis, vorzugsweise mindestens 10 % größer ist.

8. Lötverbindung, umfassend eine Legierung nach einem der vorhergehenden Ansprüche.

9. Verwendung einer Legierung nach einem der Ansprüche 1-7 in einem Lötverfahren, wobei das Lötverfahren vorzugsweise ausgewählt ist aus Wellenlöten, Oberflächenmontagetechnik-Löten (SMT-Löten), Chipbefestigungslöten, thermisches Grenzflächenlöten, Handlöten, Laser- und HF-Induktionslöten und Nachbearbeitungslöten.

## Revendications

1. Alliage de soudure sans plomb, comprenant : de 35 à 59 % en poids de Bi ; de 0,003 à 0,5 % en poids de Co ;
de 0,05 à 1,0 % en poids de Cu ;
de 0 à 1,0 % en poids d'Ag, et le solde de Sn, conjointement avec d'éventuelles impuretés inévitables n'étant pas plus de 1,0 % en poids.

2. Alliage tel que revendiqué dans la revendication 1, comprenant de 35 à 55 % en poids de Bi ou de 57 à 59 % en poids de Bi.

3. Alliage tel que revendiqué dans l'une quelconque revendication précédente, comprenant : de 0,01 à 0,8 % en poids d'Ag, de préférence de 0,3 à 0,7 % en poids d'Ag, plus préférablement 0,4 à 0,6 % en poids d'Ag, encore plus préférablement environ 0,5 % en poids d'Ag.

4. Alliage tel que revendiqué dans l'une quelconque revendication précédente, comprenant un ou plusieurs parmi :
de 0,01 à 0,07 % en poids de Co ; et de 0,1 à 0,5 % en poids de Cu.

5. Alliage tel que revendiqué dans la revendication 1 comprenant :
de 57 à 59 % en poids de Bi ;
de 0,1 à 0,3 % en poids de Cu ;
de 0,02 à 0,04 % en poids de Co, et le solde de Sn, conjointement avec d'éventuelles impuretés inévitables.

6. Alliage tel que revendiqué dans l'une quelconque revendication précédente sous la forme d'une barre, d'une baguette, d'un solide d'un fil fourré de fondant, d'une feuille ou bande, d'un film, d'une préforme, ou d'une poudre ou pâte étant une poudre plus un mélange de fondant,
ou des sphères de soudure pour utilisation dans des joints de grille matricielle à billes, ou une pièce de soudure préformée ou une soudure refondue ou solidifiée, ou pré-appliquée sur n'importe quel matériau soudable tel qu'un ruban de cuivre pour des applications photovoltaïques.

7. Alliage tel que revendiqué dans l'une quelconque revendication précédente présentant une énergie d'impact lorsqu'on mesure en utilisant l'essai de résilience Charpy selon ASTM STP 1072 au moins 5 % supérieure à celle de l'alliage de base Sn-Bi correspondant, de préférence au moins 10 % supérieure.

8. Joint soudé comprenant un alliage tel que défini dans l'une quelconque revendication précédente.

9. Utilisation d'un alliage tel que défini dans l'une quelconque des revendications 1 à 7 dans un procédé de soudage, de préférence dans lequel le procédé de soudage est choisi parmi soudage à la vague, soudage de technologie de montage en surface (SMT), soudage de fixation de puce, soudage d'interface thermique, soudage à la main, soudage laser et à induction RF et soudage de reprise.
